# EUROPEAN PATENT APPLICATION

(11) **EP 1 531 633 A1**
(43) Date of publication of application: **18.05.2005**
(21) Application number: 03292826.9
(22) Date of filing: 13.11.2003
(51) Int. Cl.: H04Q 3/00, H04Q 11/00, H04L 12/56

(54) **Method for restoring a connection in a telecommunication network**

(71) Applicant: ALCATEL, 75008 Paris (FR)
(72) Inventor: Belotti, Sergio, 20059 Vimercate (Milano) (IT); Canali, Massimo, 20059 Vimercate (Milano) (IT); Volontè, Stefano, 20052 Monza (Milano) (IT)
(74) Representative: Menzietti, Domenico

(57) **Abstract**

The present invention relates to method for restoring a connection (1-4) in a telecommunication network provided with a management plane, a control plane and a transport plane, wherein at least one (1) of the elements of the control plane stores recovery information associating the nominal path (1,2,3,4), that corresponds to said connection, to a set of alternative paths partially disjoint from said nominal path and to a corresponding set of lists of recoverable faults; the method comprises the steps of:
a) detecting and localizing a fault (F) within the network affecting said connection (1-4),
b) notifying at least said control plane element (1) of said fault (F),
c) selecting, between said alternative paths, a path (1,2,5,3,4) able to recover from said fault (F),
d) replacing the nominal path (1,2,3,4) with the selected alternative path (1,2,5,3,4) in the transport plane for realizing said connection.

## Description

The present invention relates to a method for restoring a connection in a telecommunication network provided with a management plane, a control plane and a transport plane.

Telecommunication networks like any system are subject to faults.

When a fault occurs within a telecommunication network, it is necessary to recover from the fault as soon as possible; time is very important nowadays (recovery time in the order of hundred of milliseconds) and will be even more important in the future (recovery time in the order of tens of milliseconds or even less).

In an operating telecommunication network several connections are active (e.g. hundreds or thousands) at the same time and each of these connections has a nominal path within the network; a fault may affect some of the active connections; the connections affected by the fault need to be restored.

In the future, many telecommunication networks will be provided with a management plane, a control plane and a transport plane.

The Telecommunication standardization sector of the International Telecommunication Union [ITU-T] issued, for example, a recommendation relating to an architecture for the Automatic Switched Optical Network [ASON] where these three plane are provided, i.e. recommendation G.8080/Y.1034 (11/2001). This recommendation specifies the architecture and requirements applicable to PDH, SDH and OTH, and describes the set of control plane components that are used to manipulate transport network resources in order to provide the functionality of setting up, maintaining and releasing connections.

Standardization activities in this field were and are carried out also by the Internet Engineering Task Force [IETF].

In a three planes telecommunication network, restoration of a connection due to a fault comprises the steps of :
- detecting and localizing the fault,
- identifying a path alternative to the nominal path,
- replacing the nominal path with the alternative path.

In order to speed up recovery, it is known to store in the element of the control plane associated to the source node of the nominal connection a pre-computed alternative path fully disjoint from the nominal path (i.e. having no network resources in common with the nominal path with the exception of the source node and the destination node).

Network resources (i.e. links and nodes) are expensive, therefore network operators would like to install network resources sufficient just for providing the services requested by their clients; network operators try to avoid spare network resources to be used only for restoration purposes and try to reduce to the minimum spare capacity (within the network resources) that can be used for restoration purposes.

If the network resources are much limited (as the operators would like to), it is possible that a replacement action fails if the network resources associated to the alternative path do not have enough free capacity at the time of the fault; in this case, the connection is not restored.

A partial solution to this problem could be to store in the elements of the control plane more than one pre-computed fully disjoint alternative path and to select the one that has enough free capacity; anyway, the number of alternative paths fully disjoint from a nominal path within a network is much limited (2 or 3, but sometimes only 1) and the selection activity is complicated (it is necessary to check the free capacity of each network resource belonging to the alternative paths) and therefore time-consuming.

Object of the present invention is to provide a restoration method that overcomes the drawbacks of the prior art.

This object is achieved through the method having the functionalities set out in independent claim 1.

The basic idea underlying the present invention consists in that at least one of the elements of the control plane stores recovery information associating the nominal path to a set of alternative paths partially disjoint from said nominal path and to a corresponding set of lists of recoverable faults.

In this way, the number of possible alternative paths is much increased and the network resources can be used more effectively leading to an economy in network resources.

Further advantageous functionalities of the method according to the present invention are set out in the dependent claims.

According to further aspects, the present invention relates also to a control plane element, to a telecommunication network equipment, to a processor product program, to memory means having the features set out respectively in independent claims 12, 13, 14, 15.

The present invention can be better understood through the following description to be considered in conjunction with the accompanying drawings, in which :
Fig.1 shows schematically a simplified telecommunication network,
Fig.2 shows schematically a telecommunication network equipment used for all the nodes of the network of Fig.1.

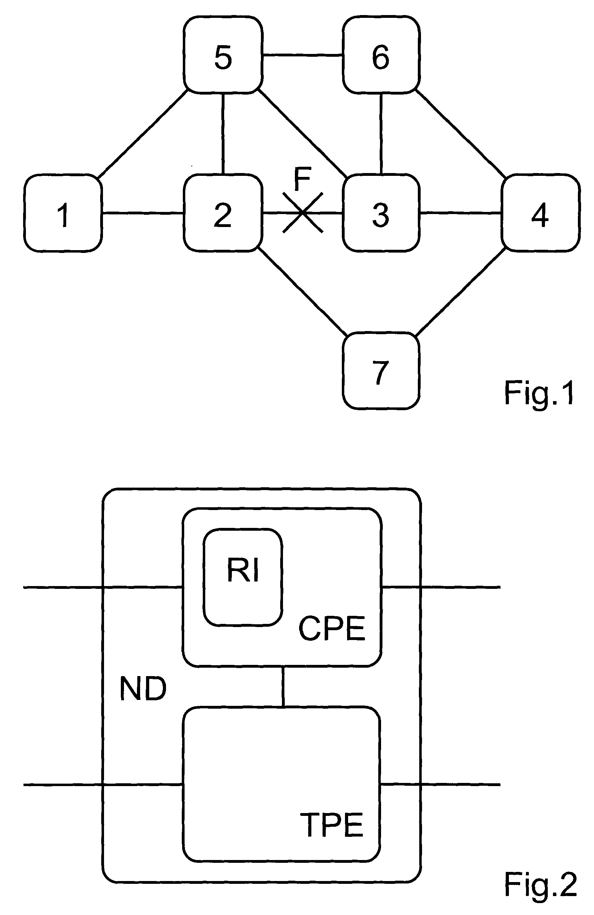

The network of Fig.1 consists of seven nodes, respectively labelled 1,2,3,4,5,6,7, and of eleven links, i.e. 5-6, 5-1, 5-2, 5-3, 6-3, 6-4, 1-2, 2-3, 3-4, 2-7, 4-7.

The equipment of Fig.2 comprises a transport plane element TPE and a control plane element CPE; this equipment has been labelled ND because it has been used for all the nodes of the telecommunication network of Fig.1; the two elements TPE and CPE are electrically linked (a simple cable, an Ethernet cable, a bus, ...) and in communication between them; element CPE comprises, among other things (not shown in the figure for simplicity), memory means RI for storing recovery information. Element TPE is further linked to other transport plane elements of the telecommunication network and element CPE is further linked to other control plane elements of the telecommunication network; alternatively, the links of the control plane and the links of the transport plane may be realized through the same physical links but, for example, through different VCs or different wavelengths. It must be understood that Fig.2 is only a schematic example and that, in general, a telecommunications network comprises equipments of many different kinds and architectures.

It must be noted that, in Fig.1, only links between the transport plane elements are shown.

The method of the present invention serves for restoring a connection in a telecommunication network provided with a management plane, a control plane and a transport plane; obviously, there is a need to restore a connection when such connection is interrupted due to a fault within the network.

A connection corresponds to a nominal path within the network and, in general (if no fault is present), the connection is realized through the nominal path; anyway, in principle, the present invention is applicable equivalently also in those cases when the connection is realized through a backup path.

The method of the present invention provides that at least one of the elements of the control plane stores recovery information associating the nominal path (corresponding to the connection to be restored) to a set of alternative paths partially disjoint from said nominal path and to a corresponding set of lists of recoverable faults, and comprises the steps of:
a) detecting and localizing a fault within the network affecting the connection to be restored,
b) notifying at least said control plane element of said fault,
c) selecting, between said alternative paths, a path able to recover from said fault,
d) replacing the nominal path with the selected alternative path in the transport plane for realizing said connection.

In this way, the restoration process is very efficient as only effective alternative paths are considered.

With reference to the example of Fig.1, a connection was realized between node 1 and node 4 through nominal path 1,2,3,4; let us assume that the following recovery information is stored in the control plane element of node 1:
nominal path : [1 2 3 4]
alternative path : [1 5 3 4] → faults : node 2, link 1-2, link 2-3
alternative path : [1 2 7 4] → faults : node 3, link 2-3, link 3-4
alternative path : [1 5 2 3 4] → faults : link 1-2
alternative path : [1 2 5 3 4] → faults : link 2-3
alternative path : [ 1 2 3 6 4] → faults : link 3-4

A fault F occurred to link 2-3; node 2 detects and localize fault F and then notifies node 1 of fault F; considering the above recovery information, the alternative path able to recover from fault F (i.e. a fault to link 2-3) is the path 1,5,3,4; thereafter, the nominal path is replaced with this alternative path. The restoration process was successful as there was enough free transport capacity in links 1-5 and 5-3 for traffic associated to the connection affected by fault F.

The alternative path of this specific example is partially disjoint from the nominal path (in fact, links 1-2 and 3-4 and nodes 2 and 3 are common) and is pre-computed.

In this specific example, only one connection was considered. If other connections would have been affected by fault F, a similar process should have been repeated for all affected connections.

Additionally, it must be considered that the network of Fig.1 may be a sub-network of a much bigger network.

According to its broadest definition, the present invention is independent from the method of replacing the nominal path.

According to its broadest definition, the present invention is independent also from the method of selecting the alternative path.

According to the present invention, it is advantageous that, if the above mentioned replacement step fails, the following further steps be carried out :
e) selecting, between said alternative paths, an other path able to recover from said fault,
f) replacing the nominal path with the other selected alternative path in the transport plane for realizing said connection.

Failure of a replacement step is typically due, for example, to insufficient free transport capacity in the network resources associated to the selected alternative path; failures are more often when network transport resources are limited and the number of active connections is high.

Such further steps make sense, in general, if there are more than one alternative path able to recover from a certain fault.

In the example of Fig.1, fault F may be recovered (with respect to nominal path 1,2,3,4) through many alternative paths:
- [1 2 5 3 4],
- [1 2 5 6 4],
- [1 2 5 6 3 4],
- [1 5 3 4],
- [1 5 6 4],
- [1 5 6 3 4],
- [1 2 7 4];
according to this advantageous teaching, if the one alternative path (e.g. the first one) can not be used another alternative path (e.g. the second one) is tried.

For maximising the probability to recover from a fault, steps e) and f) should be repeated until a replacing step is successful.

In the above example, seven possibilities are available; obviously, if many trials are used, the recovery time is high; anyway, in general, it is better to succeed in restoring a connection even if it takes a long time rather then leaving the connection not restored.

The elements of the control plane may further store recovery information associating a nominal path to at least one alternative path that is fully disjoint from said nominal path and that can be selected for replacing purposes.

In the example of Fig.1, only one path is alternative to nominal path 1,2,3,4 and fully disjoint from it, i.e. path 1,5,6,4.

This is particularly useful, in these three planes networks, in order to allow that the restoration process be carried out also by the Network Manager.

Additionally, the fully disjoint alternative path is able to recover from any fault; therefore, could be one of the possible choices for the replacement step.

According to the present invention, recovery information may be stored in one or more elements of the control plane.

A first possibility is to store recovery information within the element of the control plane associated to the source and/or the destination node of the nominal path corresponding to the connection.

In the case of the example of Fig.1, the connection is between node 1 and node 4; the nominal path is 1,2,3,4; the source node is node 1 and the destination node is node 4; recovery information for such connection may be stored in the control plane element of node 1 or in the control plane element of node 4 or in both.

This is particularly adapted in case of "end-to-end restoration" where the restoration is driven by either the source node or the destination node.

A second possibility is to store recovery information within the element of the control plane associated to each intermediate node of the nominal path corresponding to the connection connection.

In the case of the example of Fig.1, the connection is between node 1 and node 4; the nominal path is 1,2,3,4; the intermediate nodes are node 2 and node 3; recovery information for such connection may be stored in the control plane element of node 2 and in the control plane element of node 3.

This is particularly adapted in case of "local restoration" where the restoration is driven by intermediate nodes.

A third possibility is to store recovery information within the element of the control plane associated to all the nodes of the nominal path corresponding to the connection.

This is particularly adapted in case both "end-to-end" and "local" restoration is desired within the telecommunications network.

In a telecommunications network different kinds of faults may occur.

If a telecommunications network is able to detect and localize link faults, it is advantageous that the method according to the present invention be able to recover from link faults; for this purpose, the stored recovery information must associate a nominal path to a set of alternative paths and to a corresponding set of lists of recoverable link faults.

If a telecommunications network is able to detect and localize node faults, it is advantageous that the method according to the present invention be able to recover from node faults; for this purpose, the stored recovery information must associate a nominal path to a set of alternative paths and to a corresponding set of lists of recoverable node faults.

If a telecommunications network is able to detect and localize shared risk group faults, it is advantageous that the method according to the present invention be able to recover from shared risk group faults; for this purpose, the stored recovery information must associate a nominal path to a set of alternative paths and to a corresponding set of lists of recoverable shared risk group faults. As it is known, in a telecommunications network, there are resources that are likely to be affected simultaneously by a fault; this may happen, for example, when a number of distinct physical links are the same protection pipe and therefore if the pipe is damaged all the links contained may be broken, or when a number of elements (e.g. some transport plane elements and one control plane elements) are located within the same cabinet and therefore a lack a power to the cabinet causes that all the elements do not operate. What has been just described are shared risk groups of resources. Advantageously a particularly effective restoration method takes this into account.

If a telecommunications network is able to detect and localize different kinds of faults, it is advantageous that the method according to the present invention be able to recover from different kinds of faults; in this case, the lists of recoverable faults may comprise, for example, both node faults and link faults.

In the following, specific and advantageous methods of selecting the alternative path, according to the present invention, will be considered; clearly, the primary criterion for selecting the alternative path is the fault to be recovered.

The selecting step, according to the present invention, may take into account parameters associated to the alternative paths; in this case, such path parameters are comprised in the recovery information.

Such path parameters may comprise, for example, use costs and operating costs of the nodes and of the links comprised in the alternative paths. In this way, the restoration method according to the present invention may achieve the result (i.e. restoration) with the minimum cost.

Such path parameters may comprise the degree of use of the nodes and of the links of the alternative paths. In this way, the restoration method according to the present invention may achieve the result (i.e. restoration) maintaining a (relatively) uniform use of the network resources.

The selecting step, according to the present invention, may take into account parameters associated to the connection to be restored; in this case, such connection parameters are comprised in the recovery information.

Such connection parameters may comprise, for example, the priority of the connection affected by the fault, In this way, the restoration method according to the present invention may restore before and/or preferably the most important connections.

The selecting step, according to the present invention, may also take into account many different parameters.

In the following, the further aspects of the present invention will be described.

The control plane element for a telecommunication network according to the present invention is adapted to carry out the method for restoring connections described above.

Such a control plane element may be a loose equipment; for example, it can be a computer, e.g. a workstation, provided with suitable communications means and suitably programmed.

Alternatively, such a control plane element may be comprised in a telecommunications network equipment together with other components. In the specific example of Fig.2, equipment ND comprises one control plane element CPE and one transport plane element TPE; different equipments may comprise a different number of elements. It must be noted that a control plane element may be associated to more than one transport plane element.

A control plane element usually comprises at least one processor; in order to carry out the method according to the present invention, the easiest way is to provide a memory for the processor and to store a suitable program.

Therefore, the present invention relates also to a processor program product comprising program code portions adapted for the implementation of the method described above when executed by a processor and to memory means storing such a program.

## Claims

1. Method for restoring a connection (1-4) in a telecommunication network, the network being provided with a management plane, a control plane and a transport plane, wherein at least one (1) of the elements of the control plane stores recovery information associating the nominal path (1,2,3,4), that corresponds to said connection, to a set of alternative paths partially disjoint from said nominal path and to a corresponding set of lists of recoverable faults, comprising the steps of:
a) detecting and localizing a fault (F) within the network affecting said connection (1-4),
b) notifying at least said control plane element (1) of said fault (F),
c) selecting, between said alternative paths, a path (1,2,5,3,4) able to recover from said fault (F),
d) replacing the nominal path (1,2,3,4) with the selected alternative path (1,2,5,3,4) in the transport plane for realizing said connection.

2. Method according to claim 1, wherein, if step d) fails, provides the steps of :
e) selecting, between said alternative paths, an other path able to recover from said fault,
f) replacing the nominal path with the other selected alternative path in the transport plane for realizing said connection.

3. Method according to claim 2, wherein steps e) and f) are repeated until a replacing step is successful.

4. Method according to any of the preceding claims, wherein said element (1) of the control plane further stores recovery information associating said nominal path (1,2,3,4) to at least one alternative path (1,5,6,4) that is fully disjoint from said nominal path and that can be selected for replacing purposes.

5. Method according to any of the preceding claims, wherein said recovery information are stored within the element of the control plane associated to the source (1) and/or the destination (4) node of the nominal path (1,2,3,4) corresponding to said connection.

6. Method according to any of the preceding claims, wherein said recovery information are stored within the element of the control plane associated to each intermediate node (2,3) of the nominal path (1,2,3,4) corresponding to said connection.

7. Method according to any of the preceding claims, wherein said recoverable faults comprise link faults.

8. Method according to any of the preceding claims, wherein said recoverable faults comprise node faults.

9. Method according to any of the preceding claims, wherein said recoverable faults comprise shared risk group faults.

10. Method according to any of the preceding claims, wherein the selecting step takes into account parameters associated to the alternative paths, such path parameters being comprised in the recovery information.

11. Method according to any of the preceding claims, wherein the selecting step takes into account parameters associated to said connection, such connection parameters being comprised in the recovery information.

12. Control plane element for a telecommunication network **characterized by** the fact of being adapted to carry out the method according to any of claims from 1 to 11 for restoring connections.

13. Telecommunication network equipment comprising a control plane element according to claim 12.

14. Processor program product comprising program code portions adapted for the implementation of the method according to any of claims from 1 to 11 when executed by a processor.

15. Memory means storing a processor program product comprising program code portions adapted for the implementation of the method according to any of claims from 1 to 11 when executed by a processor.
